# EUROPEAN PATENT APPLICATION

(11) **EP 1 767 268 A1**
(43) Date of publication of application: **28.03.2007**
(21) Application number: 06020106.8
(22) Date of filing: 26.09.2006
(51) Int. Cl.: B01J 19/24, B01F 13/00, B01J 19/00

(54) **Fluidic device**

(30) Priority: 27.09.2005 JP 2005280038
(71) Applicant: FUJIFILM Corporation, Minato-ku Tokyo (JP)
(72) Inventor: Nosaka, Norihito, c/o Fuji Photo Film Co., Ltd., Minami-Ashikara-shi, Kanagawa (JP); Fujisawa, Mamoru, c/o Fuji Photo Film Co., Ltd., Minami-Ashikara-shi, Kanagawa (JP); Fujiwara, Takayuki, c/o Fuji Photo Film Co., Ltd., Minami-Ashikara-shi, Kanagawa (JP); Ichikawa, Yasunori, c/o Fuji Photo Film Co., Ltd., Minami-Ashikara-shi, Kanagawa (JP)
(74) Representative: HOFFMANN EITLE

(57) **Abstract**

A fluidic device (12) is provided which forms a precisely concentric flow and is manufactured at a low cost. The fluidic device (12) has a two tube structure including an outer larger diameter circular tube (30) and an inner smaller diameter circular tube (32), with a circular annular space (34) provided therebetween in which a plurality of centering circular tubes (36) are closely displaced. A fluid L1 is supplied in the smaller diameter circular tube (32), and a fluid L2 is supplied in the annular space (34) or the plurality of centering circular tubes (36). This allows a precisely concentric double-layer flow to be formed.

## Description

### BACKGROUND OF THE INVENTION

### Field of the Invention

The present invention relates to a fluidic device, in particular, a fluidic device which comprises a concentric rectifying section which precisely can form a concentric flow when a plurality of supplied fluids flow into a fluid flow path.

### Description of the Related Art

In recent years, in the fields including chemical industries or in medicinal industries in which medicines, reagents and the like are manufactured, a technology to manufacture chemical substances by flowing a plurality of fluids in a flow path for reaction has been in the limelight, and the technology is embodied, for example, as a fluidic device such as micro reactor. In a fluidic device, a plurality of fluids flow in a flow path having a small cross sectional area as a laminar flow to be reacted to each other, so that chemical substances, which are reaction products of the reaction, can be continuously manufactured. This method, unlike in the case of batch systems for reactions using agitating tanks, significantly improves a reaction efficiency of the device because fluids are continuously flowing in a narrow flow path, and a reaction occurs at interfaces of the fluids where different kinds of reacting molecules in the fluids face each other, and also, in the method, chemical substances having highly monodispersed microparticles can be manufactured.

Such fluidic devices include a device having a concentric flow structure in which a plurality of fluids concentrically flow in a flow path, which is useful to prevent attachment of reaction products to walls of the flow path.

A device having a concentric flow structure is disclosed in Japanese Patent Application Laid-Open No. 2002-292274, and Japanese Patent Application Laid-Open No. 2003-164745, for example.

In Japanese Patent Application Laid-Open No. 2002-292274, a fluidic device comprising an introducing flow path to a reaction flow path is disclosed, and the introducing flow path has three tube structure which is supported at a base end thereof. Two fluids which react to each other flow in an innermost layer and an outermost layer of the three tube structure respectively, and an inert fluid flows between the two fluids, so that reacted products are not likely to be attached to an outlet of the introducing flow path.

In Japanese Patent Application Laid-Open No. 2003-164745, a fluidic device for forming a concentric flow is disclosed which includes a disc-shaped supply plate, a disc-shaped interflow plate, and a disc-shaped exhaust plate. This fluidic device can be disassembled into each of the above plates, thereby each plate can be easily cleaned as needed including when any failure occurs in a flow path therein due to attachment of reaction products and the like. In re-assembling the plates after disassembly, the plates can be positioned to each other by using positioning pins or in-wrought structures.

### SUMMARY OF THE INVENTION

However, in such a structure similar to that in Japanese Patent Application Laid-Open No. 2002-292274, an inner tube is supported to an outer tube at a base end of an introducing flow path which is located opposite to an outlet thereof, and this configuration provides only a small portion to support the inner tube, and it is difficult to make the inner tube and the outer tube have a common central axis with a high positioning accuracy. With a poor positioning accuracy for the common central axis, a precisely concentric flow of fluids cannot be formed. As a result, turbulence occurs in the concentric flow of fluids, and prevents forming an accurate laminar concentric flow in a reaction flow path, which causes a non-uniform dispersion at the interface between fluids. The non-uniform dispersion, in turn, provides another problem that a degree of purity of produced chemical substances will be lowered, or yield of the chemical substances will be decreased.

In the structure of Japanese Patent Application Laid-Open No. 2003-164745, a concentric flow can be formed more precisely compared to the case in Japanese Patent Application Laid-Open No. 2002-292274, but the structure of Japanese Patent Application Laid-Open No. 2003-164745 cannot be manufactured easily by machining, and a special processing method such as microelectro-discharge machining is required. This leads to a problem of manufacturing a fluidic device by a complicated method at a high cost. In addition, because a thickness of each disk-shaped plate is limited to a certain value, in order to construct a fluidic device with a high aspect ratio (flow path length/equivalent diameter), a plurality of plates needs to be laminated, and more number of laminates tend to lower the positioning accuracy in assembling, thereby a precisely concentric flow cannot be easily formed.

The problems due to the fact that a precisely concentric flow cannot be formed in performing reaction operations, such as the above mentioned chemical reaction, are also problems in devices in which unit operations for fluids (e.g., mixture, extraction, separation, heating, cooling, heat exchanging, crystallization, and absorption) are performed in a flow path.

The present invention was made in view of the above background, and one object of the present invention is to provide a fluidic device which forms a precisely concentric flow, can be easily constructed to have reliable maintenance and a desired aspect ratio, and can be easily manufactured at a low cost by machining without any special processing technology.

A first aspect of the present invention, in order to achieve the above objects, provides a fluidic device characterized by comprising a concentric rectifying section for rectifying a plurality of supplied fluids to form a concentric flow of the fluids, and a fluid flow path for distributing the concentric flow out of the concentric rectifying section for an intended process, characterized in that the concentric rectifying section is of a multi-tube structure with two or more tubes including: an outer larger diameter tube; a smaller diameter tube positioned inside of the larger diameter tube with an annular space provided therebetween; and a plurality of centering tubes disposed along the annular space which are in contact with both of an inner surface of the larger diameter tube and an outer surface of the smaller diameter tube to make the larger diameter tube and the smaller diameter tube have a common central axis.

The term "a diameter of a tube" as simply used herein means an outer diameter of a tube. Hereinafter, the term has the same meaning for a circular tube radially having a circular cross section and a polygonal tube having a regular polygonal (e.g. square) cross section. In describing a larger diameter tube positioned outermost and a smaller diameter tube positioned inside of the larger diameter tube in a multi-tube structure with two or more tubes, the larger diameter tube and the smaller diameter tube means a relative relationship therebetween, and is not intended to mean a structure which includes only two tubes. Thus, in a three tube structure, the relationship of a larger diameter tube and a smaller diameter tube can be applied to a relationship between an outer most tube and a middle tube, and also to a relationship between the middle tube and an innermost tube. This relationship can also be applied to the polygonal tube as in the circular tubes. In the explanation below, to describe a three tube structure, the middle circular or polygonal tube may be referred to as a middle diameter tube (middle diameter circular tube or middle diameter polygonal tube).

According to the first aspect of the present invention, in an annular space between an outer larger diameter tube and a smaller diameter tube positioned inside of the larger diameter tube in a multi-tube structure, a plurality of centering tubes are disposed which are in contact with both of an inner surface of the larger diameter tube and an outer surface of the smaller diameter tube to make the larger diameter tube and the smaller diameter tube have a common central axis, thereby, due to the centering effect of the centering tubes, a distance between the larger diameter tube and the smaller diameter tube equals to the diameter of the centering tubes at any points along the annular space. The centering tubes support the larger diameter tube and the smaller diameter tube along the entire lengths thereof unlike in the case of a conventional spacer which supports only a part of the larger diameter tube and the smaller diameter tube in a longitudinal direction thereof. Thus a distance between the larger diameter tube and the smaller diameter tube equals to the diameter of the centering tubes when the concentric rectifying section is radially cut at any points of the concentric rectifying section along its longitudinal direction. In this configuration, preferably the centering tubes are closely disposed in the annular space, and at least three centering tubes may be disposed at an angle of 120 degrees from each other. This enables the larger diameter tube and the smaller diameter tube to be accurately positioned to have a common central axis.

The larger diameter tube, the smaller diameter tube, and the centering tubes are preferably circular tubes or regular polygonal tubes (e.g. square tube), but any tube can be used for the larger diameter tube, the smaller diameter tube, and the centering tubes as far as there is a relationship between them which makes the centering tubes positioned between the larger diameter tube and the smaller diameter tube so that the larger diameter tube and the smaller diameter tube have a common central axis.

A second aspect of the present invention according to the first aspect provides the fluidic device, characterized in that the larger diameter tube, the smaller diameter tube and the centering tubes are circular tubes having a circular cross section.

In the second aspect the larger diameter tube, the smaller diameter tube and the centering tubes are circular tubes which is one of the preferable aspects, and for example in terms of two tube structure of the present invention, because a plurality of centering circular tubes are disposed in a circular annular space between a larger diameter circular tube and a smaller diameter circular tube of the two tube structure, the larger diameter circular tube and the smaller diameter circular tube have a common central axis. When a fluid A flows in the smaller diameter circular tube and a fluid B flows in the plurality of centering circular tubes disposed annularly, a double-layer concentric flow of the fluid A and the fluid B can be precisely formed in the fluid flow path.

A third aspect of the present invention according to the first aspect provides the fluidic device characterized in that the larger diameter tube, the smaller diameter tube and the centering tubes are polygonal tubes having a regular polygonal cross section.

In the third aspect the larger diameter tube, the smaller diameter tube and the centering tubes are regular polygonal tubes which is one of the preferable aspects, and for example in terms of two tube structure of the present invention, because a plurality of centering polygonal tubes are disposed in a polygonal annular space between a larger diameter polygonal tube and a smaller diameter polygonal tube of the two tube structure, the larger diameter polygonal tube and the smaller diameter polygonal tube have a common central axis. When a fluid A flows in the smaller diameter polygonal tube and a fluid B flows in the plurality of annularly disposed centering polygonal tubes, a double-layer concentric flow of the fluid A and the fluid B can be precisely formed in the fluid flow path.

A fourth aspect of the present invention according to the third aspect provides the fluidic device characterized in that the polygonal tube is a polygonal tube having a square cross section.

In the fourth aspect, a polygonal tube having a square cross section is used.

A fifth aspect of the present invention according to any one of the first to fourth aspects provides the fluidic device, characterized in that a diameter of the larger diameter tube, a diameter of the smaller diameter tube, and a diameter of the centering tubes are set so that the centering tubes are in contact with each other.

In the fifth aspect, since the centering tubes are positioned to be in contact with not only the larger diameter tube and the smaller diameter tube but also adjacent centering tubes, the centering tubes are closely disposed in the annular space between the larger diameter tube and the smaller diameter tube. This positioning makes the annular space filled with tubes and so any wobbling of the tubes can be prevented, which further facilitates setting of a common central axis of the larger diameter tube and the smaller diameter tube.

A sixth aspect of the present invention, in order to achieve the above objects, provides a fluidic device, characterized by comprising a concentric rectifying section for rectifying a plurality of supplied fluids to form a concentric flow of the fluids, and a fluid flow path for distributing the concentric flow out of the concentric rectifying section for an intended process, characterized in that the concentric rectifying section includes a larger diameter tube in which a plurality of smaller diameter tubes of a same diameter are closely disposed, with one of the plurality of smaller diameter tubes being disposed coaxially about a central axis of the larger diameter tube, and a group of annularly disposed tubes, which is consisted of the remaining smaller diameter tubes other than the central coaxially disposed tube, forming at least one or more layer of tubes about the central coaxially disposed tube.

According to the sixth aspect of the present invention, since a plurality of smaller diameter tubes of a same diameter are closely housed in a larger diameter tube, and one of the plurality of smaller diameter tubes is disposed coaxially about a central axis of the larger diameter tube, and also a group of the remaining circular diameter tubes other than the central coaxially disposed tube forms at least one or more layer of tubes which are annularly disposed about the central coaxially disposed tube, a center of the centrally located smaller diameter circular tube is coincident with a center of an imaginary ring which is formed by a line connecting the centers of each smaller diameter circular tube of the group. This makes the centrally disposed smaller diameter circular tube and the group of the other annularly disposed circular tubes positioned coaxially about a common central axis, and so when different fluids are supplied into the centrally disposed smaller diameter circular tube and into the group of the other annularly disposed circular tubes, a precisely concentric flow into the fluid flow path is formed.

The larger diameter tube and the smaller diameter tube are preferably circular tubes or regular polygonal tubes (e.g. square tube), but any tube can be used for the larger diameter tube, the smaller diameter, and the group of the other annularly disposed tubes as far as there is a relationship between them which makes the larger diameter tube, the smaller diameter tube, and the group of the other annularly disposed tubes have a common central axis.

A seventh aspect of the present invention according to the sixth aspect provides the fluidic device, characterized in that the larger diameter tube is a circular tube having a circular cross section, and the smaller diameter tube is a circular tube having a circular cross section.

The seventh aspect includes an embodiment in which the larger diameter tube, the smaller diameter tube, and the group of the other annularly disposed tubes are all circular tubes, and in the configuration in which a plurality of smaller diameter circular tubes having a same diameter are closely housed in the larger diameter circular tube, since one of the plurality of smaller diameter circular tubes is disposed coaxially about a central axis of the larger diameter circular tube, and also a group of annularly disposed tubes, which is consisted of the remaining smaller diameter tubes other than the central coaxially disposed tube, forms at least one or more layer of tubes about the central coaxially disposed tube, a center of the centrally located smaller diameter circular tube is coincident with a center of an imaginary ring which is formed by a line connecting the centers of each smaller diameter circular tube of the group. This makes the centrally located smaller diameter circular tube and the group of the other annularly disposed circular tubes positioned about a common central axis, and so when different fluids are supplied into the centrally located smaller diameter circular tube and into the group of the other annularly disposed circular tubes respectively, a precisely concentric flow into the fluid flow path is formed.

A eighth aspect of the present invention according to the sixth aspect provides the fluidic device, characterized in that the larger diameter tube is a polygonal tube having a regular polygonal cross section, and the smaller diameter tube are polygonal tubes having a regular polygonal cross section.

In the eighth aspect, the larger diameter tube is a polygonal tube having a regular polygonal cross section, the smaller diameter tube and the group of the annularly disposed tubes are polygonal tubes having a regular polygonal cross section, and in the configuration in which a plurality of smaller diameter polygonal tubes having a same diameter and a regular polygonal cross section are closely housed in the larger diameter polygonal tube, since one of the plurality of smaller diameter polygonal tubes is disposed coaxially about a central axis of the larger diameter polygonal tube, and also a group of the remaining polygonal smaller diameter tubes other than the central coaxially disposed tube forms at least one or more layer of tubes which are annularly disposed about the central coaxially disposed tube, a center of the centrally located smaller diameter polygonal tube is coincident with a center of an imaginary ring which is formed by a line connecting the centers of each smaller diameter polygonal tube comprising the group of the annularly disposed polygonal tubes. This makes the centrally located smaller diameter polygonal tube and the group of the other annularly disposed polygonal tubes positioned about a common central axis, and so when different fluids are supplied into the centrally located smaller diameter polygonal tube and into the group of the other annularly disposed polygonal tubes respectively, a precisely concentric flow can flow into the fluid flow path.

A ninth aspect of the present invention according to the eighth aspect provides the fluidic device, characterized in that the polygonal tube is a polygonal tube having a square cross section.

In the ninth aspect, a polygonal tube having a square cross section is used.

A tenth aspect of the present invention according to any one of the first to ninth aspects provides the fluidic device, characterized in that, among the tubes which form the concentric rectifying section, the tube at the outermost has an inner diameter which allows a laminar concentric flow to be formed in the fluid flow path.

A fluidic device according to the present invention is configured as described in the tenth aspect, because the present invention for providing a precisely concentric flow is more effective in a laminar flow. Although the inner diameter of the outermost tube changes a little depending depends on a flow rate, viscosity, or the like of fluids, the inner diameter is preferably 10 mm or less, and more preferably 1 mm or less.

An eleventh aspect of the present invention according to any one of the first to tenth aspects provides the fluidic device, characterized in that, among the tubes which form the concentric rectifying section, the centrally located tube has a length which is different from lengths of the other tubes.

A fluidic device according to the present invention is configured as described in the eleventh aspect, because when the outlet openings of each tube (for example, the centrally disposed tube, and the group of the other annularly disposed tubes) which form each layer of the concentric flow are deviated from each other, the flows of fluids are stabilized so that a stable concentric flow can be easily formed. As a result, the interface between the fluids does not slant, which prevents any attachment of reaction products to the outlet openings, the walls of the flow path or the like.

A twelfth aspect of the present invention according to any one of the first to eleventh aspects provides the fluidic device, characterized in that at least one of the tubes which form the concentric rectifying section has an outlet opening which is cut into a tapered shape.

Such a cutting of an outlet opening into a tapered shape stabilizes the fluid flow out of the fluid flow path, and so a stable concentric flow can be formed.

A thirteenth aspect of the present invention according to any one of the first to twelfth aspects provides the fluidic device, characterized in that the concentric rectifying section is removably fitted in an inlet opening of an outer shell tube which forms the fluid flow path.

According to the thirteenth aspect, since the concentric rectifying section is removably fitted in an inlet opening of an outer shell tube which forms the fluid flow path, upon any failure in a fluid flow in the concentric rectifying section, the concentric rectifying section can be easily removed from the outer shell tube for cleaning. This provides a reliable maintenance. Moreover, a concentric rectifying section can be conveniently easily exchanged with other type of concentric rectifying section in correspondence to the number of fluids.

A fourteenth aspect of the present invention according to any one of the first to thirteenth aspects provides the fluidic device, characterized in that the outer shell tube for the fluid flow path has an outlet opening in which a concentric flow separating section is removably fitted to separate the fluids flowing through the fluid flow path into a concentric flow.

According to the fourteenth aspect, since the concentric rectifying section and the concentric separating section have a common central axis, in separating the fluids flowing through the fluid flow path into a concentric flow at the concentric separating section, the concentric flow can be separated on the same central axis basis as the concentric rectifying section. That is, in a case where a precise triple-layer concentric flow, for example, flows out of the concentric rectifying section into the fluid flow path so that a product is generated in a middle layer of the triple-layer concentric flow, if the central axis of the concentric separating section is offset from the central axis of the concentric rectifying section in separating the product, a separation of the middle layer only cannot be accurately performed. Since, in the fourteenth aspect, the concentric rectifying section and the concentric separating section have a common central axis, a separation of the middle layer only can be accurately performed. In this case, the number of layers in a concentric flow which can be formed in the concentric rectifying section may be different from the number of layers in a concentric flow which can be separated at the concentric separating section. For example, although a double-layer concentric flow is formed in the concentric rectifying section with two fluids, for a separation into a three-layer concentric flow in the concentric separating section, the concentric separating section may be configured to enable the separation of the flow into three layers. Furthermore, preferably the concentric separating section is also removably fitted into the outer shell tube, so that upon a failure in the flow path, the concentric separating section can be easily removed from the outer shell tube for cleaning.

A fifteenth aspect of the present invention according to the fourteenth aspect provides the fluidic device, characterized in that the concentric rectifying section and the concentric separating section are fitted into an outer shell tube, which forms the fluid flow path, being movable in a direction of a longitudinal axis of the outer shell tube.

According to the fifteenth aspect, since the concentric rectifying section and the concentric separating section are movably fitted into a tube which forms the fluid flow path, the flow pass length of the fluid flow path can be easily changed depending on a type of reaction or the like.

A sixteenth aspect of the present invention according to any one of the thirteenth to fifteenth aspects provides the fluidic device, characterized in that the outer shell tube is configured to be divided in two parts along a longitudinal axis thereof.

According to the sixteenth aspect, since the outer shell tube is configured to be divided in two parts along a longitudinal axis thereof, the concentric rectifying section and the concentric separating section can be easily attached to and removed from the outer shell tube.

A seventeenth aspect of the present invention according to any one of the fourteenth to sixteenth aspects provides the fluidic device, further characterized by comprising a through tube which runs through both central axes of the concentric rectifying section and the concentric separating section.

According to the seventeenth aspect, since there is provided a through tube which runs through both central axes of the concentric rectifying section and the concentric separating section, the shape of an innermost layer in concentric flows can be changed from a cylinder or a square prism into a circular ring or regular polygonal ring. This reduces the thickness of the inner layer, thereby a dispersion efficiency is improved. Also, the through tube facilitates forming of a concentric flow in the fluid flow path.

An eighteenth aspect of the present invention, in order to achieve the above objects, provides a fluidic device, characterized by comprising a concentric rectifying section for rectifying a plurality of supplied fluids to form a concentric flow of the fluids, and a fluid flow path for distributing the concentric flow out of the concentric rectifying section for an intended process, characterized in that the concentric rectifying section is configured to have a multi-tube structure with two or more circular tubes including: an outer larger diameter circular tube; a smaller diameter circular tube positioned inside of the larger diameter tube with a circular annular space provided therebetween; and a cylindrical corrugated plate which is made of a corrugated plate rolled in a cylindrical shape and is interposed between the larger diameter circular tube and smaller diameter circular tube with being in contact with an inner surface of the larger diameter circular tube and an outer surface of the smaller diameter circular tube.

According to the eighteenth aspect of the present invention, the cylindrical corrugated plate is interposed between the larger diameter circular tube and smaller diameter circular tube with being in contact with an inner surface of the larger diameter circular tube and an outer surface of the smaller diameter circular tube, and the cylindrical corrugated plate centers the larger diameter circular tube and the smaller diameter circular tube to make these tubes have a common central axis, thereby when a fluid A flows in the smaller diameter circular tube and a fluid B flows between the larger diameter circular tube and smaller diameter circular tube, a double-layer concentric flow of the fluid A and the fluid B can be precisely formed in the fluid flow path.

A nineteenth aspect of the present invention, in order to achieve the above objects, provides a fluidic device, characterized by comprising a concentric rectifying section for rectifying a plurality of supplied fluids to form a concentric flow of the fluids, and a fluid flow path for distributing the concentric flow out of the concentric rectifying section for an intended process, characterized in that the concentric rectifying section is configured to have a multi-tube structure with two or more circular tubes including: an outer larger diameter circular tube; a smaller diameter circular tube positioned inside of the larger diameter tube with a circular annular space provided therebetween; and a plurality of ribs which runs parallel to the central axis of the smaller diameter circular tube and have a uniform height to contact the larger diameter circular tube, and are circumferentially displaced on the smaller diameter circular tube with being separated from each other by a uniform space.

According to the nineteenth aspect of the present invention, a plurality of ribs are interposed between the larger diameter circular tube and the smaller diameter circular tube with being in contact with the inner surface of the outer surface of the smaller diameter circular tube, and the ribs center the larger diameter circular tube and the smaller diameter circular tube to make these tubes have a common central axis, thereby when a fluid A flows in the smaller diameter circular tube and a fluid B flows between the larger diameter circular tube and smaller diameter circular tube, a double-layer concentric flow of the fluid A and the fluid B can be precisely formed in the fluid flow path.

As described above, according to the present invention, a fluidic device is provided which forms a precisely concentric flow, is easily constructed to have reliable maintenance function and a desired aspect ratio, and is easily manufactured at a low cost by machining without any special processing technology.

### BRIEF DESCRIPTION OF THE DRAWINGS

Fig. 1 is an exploded view illustrating an entire structure of a fluidic device unit having a plurality of fluidic devices according to the present invention;
Fig. 2 is a view illustrating a fluidic device according to the present invention which is preferable for two fluids;
Fig. 3 is a view illustrating an outer shell tube having a two part structure to form a fluid flow path;
Fig. 4 is a view illustrating a double-layer concentric flow including an inner layer and an outer layer;
Fig. 5 is a cross sectional view showing a fluid flow path in which a through tube is provided along a central axis of a concentric rectifying section and a concentric separating section;
Fig. 6 is a view illustrating another aspect of a fluidic device;
Fig. 7 is a view illustrating an aspect of a concentric rectifying section using a circular tube;
Fig. 8 is a view illustrating another aspect of a concentric rectifying section using a circular tube;
Fig. 9 is a view illustrating further another aspect of a concentric rectifying section;
Fig. 10 is a view illustrating further another aspect of a concentric rectifying section using a circular tube;
Fig. 11 is a view illustrating further another aspect of a concentric rectifying section using a circular tube;
Fig. 12 is a view illustrating further another aspect of a concentric rectifying section using a circular tube;
Fig. 13 is a view illustrating further another aspect of a concentric rectifying section using a square tube;
Figs. 14A to 14D are views illustrating a method for manufacturing concentric rectifying section;
Fig. 15 is a view illustrating further another aspect of a concentric rectifying section using a cylindrical corrugated plate; and
Fig. 16 is a view illustrating a method for a manufacturing concentric rectifying section having ribs formed therein.

### DETAILED DESCRIPTION OF THE PREFERRED EMBODIMENTS

Now, preferred embodiments of a fluidic device according to the present invention will be explained in detail below with reference to the accompanying drawings.

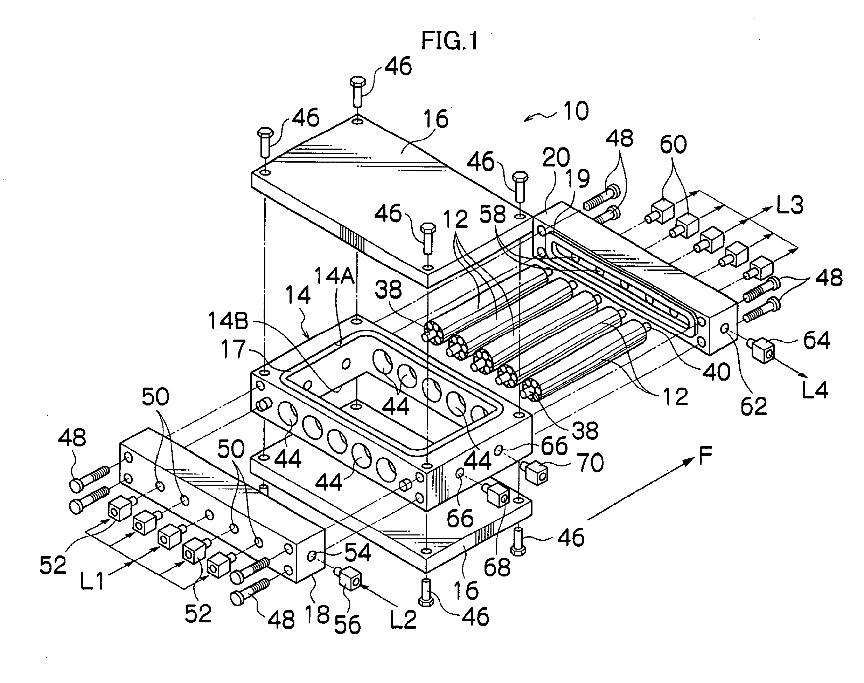

Fig. 1 is an exploded view illustrating an entire structure of a fluidic device unit having a set of a plurality of fluidic devices (five, in Fig. 1) according to the present invention, as a unit. The fluidic device used in Fig. 1 is an example which forms a double-layer concentric flow with two fluids L1, L2.

As shown in Fig. 1, a fluidic device unit 10 includes, generally, a rectangular support case 14 for supporting a plurality of fluidic devices 12, a pair of cover plates 16 for covering an upper opening 14A and a lower opening 14B of the support case 14, a supply header 18 which is mounted to the front side of the support case 14 (the fluid supply side of the fluidic device 12) for supplying the two fluids L1, L2 to the plurality of fluidic device 12, and an exhaust header 20 which is mounted to the rear side of the support case 14 (the fluid exhaust side of the fluidic device 12) for exhausting the processed fluids out of the plurality of fluidic devices 12. An arrow F of Fig. 1 shows a direction in which the fluids L1, L2 flow.

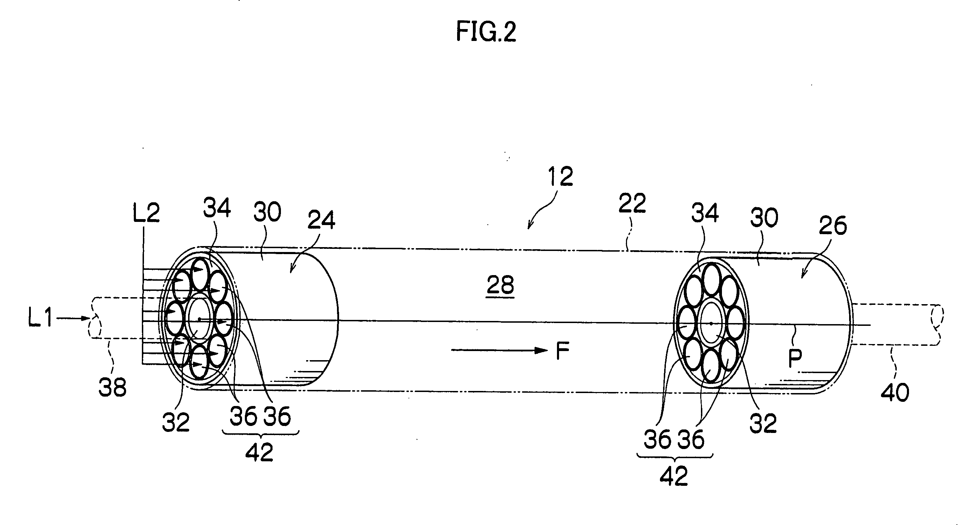

As shown in Fig. 2, the fluidic device 12 includes a cylindrical outer shell tube 22 having an inlet portion in which a concentric rectifying section 24 is removably fitted, and an outlet portion in which a concentric separating section 26 is removably fitted. This configuration forms a fluid flow path 28 between the concentric rectifying section 24 and the concentric separating section 26 in the outer shell tube 22, into which a concentric flow out of the concentric rectifying section 24 flows for an intended process.

Due to the removal fitting of the concentric rectifying section 24 and the concentric separating section 26 in the outer shell tube 22, it is easy to remove the concentric rectifying section 24 or the concentric separating section 26 from the outer shell tube 22, upon any failure in the flow path in the concentric rectifying section 24 and the concentric separating section 26, for cleaning. Also, because the concentric rectifying section 24 or the concentric separating section 26 can be easily removed from the outer shell tube 22, the outer shell tube 22 can also be easily cleaned. This provides a reliable maintenance of the fluidic device 12. The concentric rectifying section 24 and the concentric separating section 26 are not limited to have the configuration of the removal fitting, and if the removal is not necessary, the concentric rectifying section 24 and the concentric separating section 26 may be fixed to the outer shell tube 22 by adhesive or the like.

The term "intended process" as used herein means a reaction operation and a unit operation for fluids (for example, mixture, extraction, separation, heating, cooling, heat exchanging, crystallization, absorption) in which fluids are caused to react to each other. The fluid flow path 28 is not limited to have the configuration to include a pair of the concentric rectifying section 24 and the concentric separating section 26, and may include a plurality of pairs of the concentric rectifying sections 24 and the concentric separating sections 26 to perform rectification and separation in multiple stages.

The concentric rectifying section 24 and the concentric separating section 26 are configured similarly to have a two tube structure which includes a larger diameter circular tube 30 positioned outside and a smaller diameter circular tube 32. Between the larger diameter circular tube 30 and the smaller diameter circular tube 32, there is provided a circular annular space 34 in which a plurality of centering circular tubes 36 (eight, in Fig. 2) are closely disposed. Thus, the larger diameter circular tube 30, the smaller diameter circular tube 32, and the centering circular tubes 36 need to have a diameter respectively set so as to closely dispose the plurality of centering circular tubes 36 in the annular space 34. The smaller diameter circular tube 32 is positioned at the center of the concentric rectifying section 24, and a supply tube for coupling 38 is connected to the smaller diameter circular tube 32, while the smaller diameter circular tube 32 is positioned at the center of the concentric separating section 26, and an exhaust tube for coupling 40 is connected to the smaller diameter circular tube 32. Hereinafter, the groups of plurality of centering circular tubes 36 are called a group of annularly disposed tubes 42. Fig. 2 shows a fluidic device 12 having the above configuration, where a fluid L1 is supplied in the smaller diameter circular tube 32 positioned at the center of the concentric rectifying section 24, and a fluid L2 is supplied to the group of annularly disposed tubes 42.

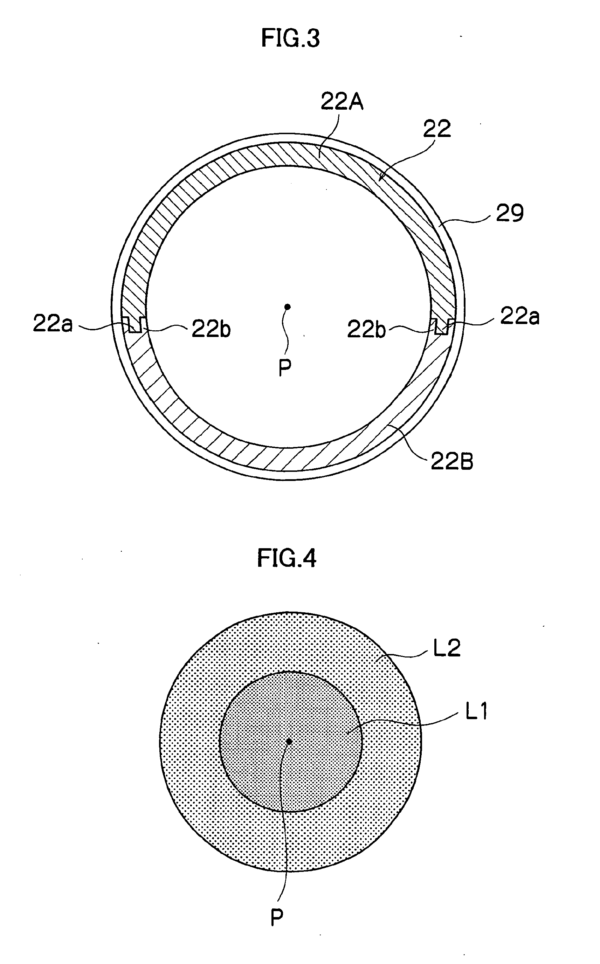

As shown in Fig. 3, the outer shell tube 22 may be configured to be divided in two parts. This provides another convenience in maintenance of the outer shell tube 22 because the outer shell tube 22 can be divided into two parts in attaching and removing the concentric rectifying section 24 or the concentric separating section 26 to or from the outer shell tube 22. That is, the outer shell tube 22 may be formed of a half circular piece 22A having a projection 22a at a fitting portion thereof, and another half circular piece 22B having a recess 22b at a fitting portion thereof so that the projection 22a can be fitted into the recess 22b. After forming the outer shell tube 22 by fitting, the position of the outer shell tube 22 in a longitudinal direction thereof may be secured by a securing ring member 29. The fitting configuration and the securing member, however, are not limited to the above, and any configuration and securing member may be used as far as there is no leak of fluid from the outer shell tube 22.

The support case 14 shown in Fig. 1 has a front surface and a rear surface, and a plurality of round holes 44 corresponding to the number of the fluidic device 12 are formed in both surfaces. The front and rear end portions of the fluidic devices 12 are fitted through the round holes 44. This makes a plurality of fluidic device 12 supported by the support case 14 with being partly projected out of the front surface and the rear surface. A pair of cover plates 16 are mounted over an upper opening 14A and a lower opening 14B of the support case 14, and are fixedly secured to the support case 14 by bolts 46, with a packing 17 being interposed therebetween respectively. Also, a supply header 18 and an exhaust header 20 are mounted to the front and rear sides of the support case 14, and are connected to the support case 14 by bolts 48, with a packing 19 being interposed therebetween respectively. This configuration provides a water-tight and hermetical space in the support case 14.

The supply header 18 is of a box shape which is open in the rear side thereof toward the support case 14 and has a plurality of round holes 50 formed; corresponding to the number of the fluidic device 12, in a front surface opposite to the opening through which the above described supply tubes for coupling 38 are passed. Each of the supply tubes for coupling 38 projects out of one round hole 50 to be connected to a male member 52 of a first coupler (fingertip joint). The first coupler is mounted to a distal tip of a supplying tube (not shown) which is extended from a fluid pump (not shown) to supply the fluid L1, and is provided with a female member (not shown). The female member is coupled to the male member 52 so that the fluid L1 is supplied to the smaller diameter circular tube 32 centrally disposed in the concentric rectifying section 24. There is also a round hole 54 which is formed in a lateral side of the supply header 18. To the round hole 54 is connected a male member 56 of a second coupler. The second coupler is mounted to a distal tip of a supplying tube (not shown) which is extended from a fluid pump (not shown) to supply the fluid L2, and is provided with a female member (not shown). The female member is coupled to the male member 56 so that the fluid L2 is supplied to a group of annularly disposed tubes 42 in the concentric rectifying section 24 through the supply header 18.

The exhaust header 20 is configured in the same way as the supply header 18. That is, the supply header 20 is of a box shape which is open in the side thereof toward the support case 14 and has a plurality of round holes 58 formed, corresponding to the number of the fluidic device 12, in a front surface opposite to the opening through which the above described exhaust tubes for coupling 40 are passed. Each of the exhaust tubes for coupling 40 projects out of the round hole 58 to be connected to a male member 60 of a third coupler. The third coupler is mounted to a distal tip of an exhausting tube (not shown), and is provided with a female member (not shown). The female member is coupled to the male member 60 so that processed fluids after being distributed in the fluid flow path 28 for an intended process such as a chemical reaction are separated into a concentric flow in the concentric separating section 26, and only a fluid L3 which forms an inner layer of the separated concentric flow is exhausted. There is also a round hole 62 which is formed in a lateral side of the exhaust header 20. To the round hole 62 is connected a male member 64 of a fourth coupler. A female member (not shown) of the fourth coupler mounted to a distal tip of an exhausting tube (not shown) is coupled to the male member 64 so that a fluid L4 which forms an outer layer of the concentric flow separated in the concentric separating section 26 is exhausted through the exhaust header 20.

The above described water tight support case 14 has a lateral side in which two round holes 66 are formed: one of the round holes 66 is provided with a male member 68 of a fifth coupler; and the other of the round holes 66 is provided with a male member 70 of a sixth coupler. To the male members 68, 70 are coupled female members of the fifth coupler and the sixth coupler (not shown) which is mounted to distal tips of a pair of tubes (not shown) extended from a heating medium circulating apparatus (not shown), so that a heating medium at a predetermined temperature is circulated between the inside of the support case 14 and the medium circulating apparatus to form a circulation line for temperature control to control a temperature in the fluidic device 12.

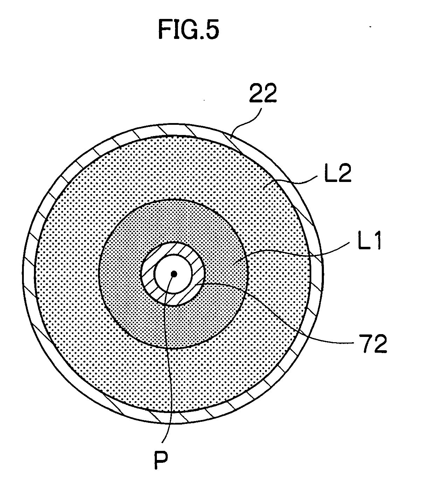

In the fluidic device unit 10 configured as described above, the concentric rectifying section 24 of the fluidic device 12 is configured to have a two tube structure including: a larger diameter circular tube 30 positioned outside and a smaller diameter circular tube 32 positioned inside. Between the larger diameter circular tube 30 and the smaller diameter circular tube 32, there is provided a circular annular space 34 in which a plurality of centering circular tubes 36 are closely disposed. This allows the larger diameter circular tube 30 and the smaller diameter circular tube 32 to be accurately positioned so as to have a common central axis P. That is, the centering circular tubes 36, having a diameter which is equal to the distance of the circular annular space 34, are closely disposed, thereby a centering function is provided in all directions by the centering circular tubes 36 having the same diameter. So, the distance between the larger diameter circular tube 30 and the smaller diameter circular tube 32 is equal to the diameter of the centering circular tubes 36 at any position of the circular annular space 34, resulting in that the larger diameter circular tube 30 and the smaller diameter circular tube 32 are positioned about a common central axis P. In addition, wherever along the longitudinal direction the concentric rectifying section 24 is cut in the diameter direction, the cross section shows that the larger diameter circular tube 30 and the smaller diameter circular tube 32 have a common central axis P. In this way, since the larger diameter circular tube 30 and the smaller diameter circular tube 32 have a common central axis P at any point along the longitudinal direction thereof, as shown in Fig. 4, a precisely concentric double-layer flow which is consisted of an L1 (inner layer) and an L2 (outer layer) can be formed. In this case, when a through tube 72 which connects the concentric rectifying section 24 and the concentric separating section 26 about the common central axis P of the concentric rectifying section 24 and the concentric separating section 26 is provided, as shown in Fig. 5, the thickness of the L1 (inner layer) can be reduced, and a dispersion efficiency between the L1 (inner layer) and the L2 (outer layer) is improved.

In order to form a precisely concentric flow, wherever along the longitudinal direction the concentric rectifying section is cut, a concentricity of the larger diameter circular tube 30 and the smaller diameter circular tube 32 (i.e. a deviation between the central axes P of the circular tubes) is preferably 100 µm or less, more preferably 50 µm or less, and most preferably 10 µm or less. The concentricity can be achieved by forming the concentric rectifying section 24 having the above described configuration by using circular tubes having accurate diameters. As a result, any turbulence in the concentric flow in the fluid flow path 28 is prevented, so that a precisely concentric laminar flow can be obtained. Thus, the dispersion at the interface between the fluid L1 and the fluid L2 will be uniform, which improves a degree of purity or yield of produced chemical substances in an operation of chemical reaction, for example.

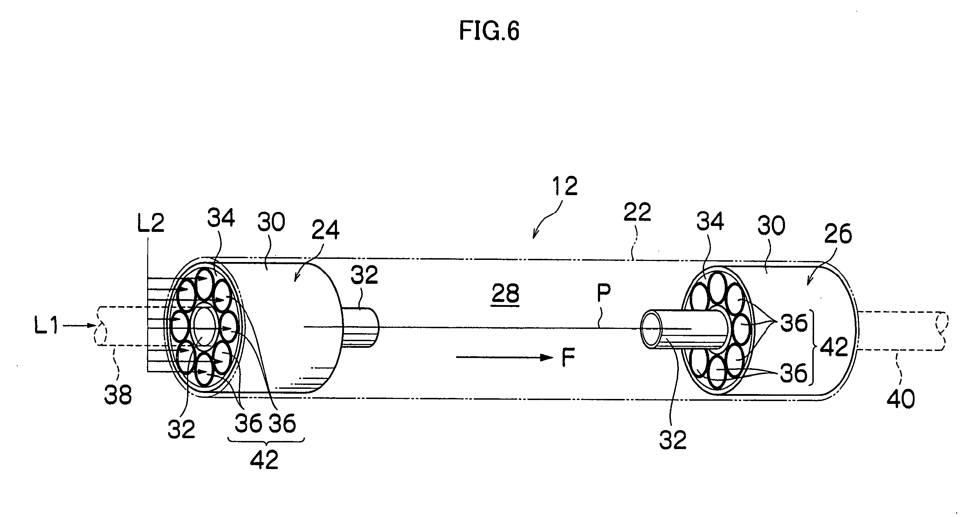

The concentric separating section 26 which is configured in the same way as the concentric rectifying section 24 is provided in the outlet portion of the outer shell tube 22. This makes the fluids flowing in the fluid flow path 28 separated into a concentric flow. In this case, since the concentric rectifying section 24 and the concentric separating section 26 have a common central axis P, when the fluids in the fluid flow path 28 are separated into a concentric flow in the concentric separating section 26, the fluids can be separated on the same central axis basis as the concentric rectifying section 24. That is, for example in a case where a precisely concentric three-layer flow is distributed by the concentric rectifying section 24 to the fluid flow path 28 and a product is generated in the middle layer of the concentric three-layer flow, if the central axis P of the concentric separating section 26 is deviated from the central axis P of the concentric rectifying section 24, the separation of the middle layer only cannot be accurately achieved for the product separation. According to the present invention, however, because the concentric rectifying section 24 and the concentric separating section 26 have a common central axis P, the middle layer can be accurately separated. This is the same for the precise separation of the inner layer or the outer layer in the three-layer concentric flow, and can be applied to any multi-layer concentric flow. In this case, as shown in Fig. 6, in the concentric rectifying section 24 and the concentric separating section 26, when the centrally positioned smaller diameter circular tube 32 is extended toward the fluid flow path to project out of the outlet position of the group of annularly disposed tubes 42, the flows of fluids are stabilized and a stable concentric flow can be formed. Also, the property of the concentric separating section 26 is improved.

In Fig. 6, the centrally positioned smaller diameter circular tube 32 is projected toward the fluid flow path, but may be retracted back from the outlet position of the group of annularly disposed tubes 42. Alternatively, the smaller diameter circular tube 32 in the concentric rectifying section 24 may be projected out while the smaller diameter circular tube 32 in the concentric separating section 26 may be retracted back, or the smaller diameter circular tube 32 in the concentric rectifying section 24 maybe retracted back while the smaller diameter circular tube 32 in the concentric separating section 26 may be projected out.

The above configuration for the concentric rectifying section 24 and the concentric separating section 26 of the present invention can be applied to cases where the configuration is used for unit operations of fluids (e.g. mixture, extraction, separation, heating, cooling, heat exchanging, crystallization, absorption) as well as chemical reactions. The above concentric rectifying section 24 is configured to form a double-layer concentric flow, but the concept of the configuration can be applied to form any multi-layer concentric flow.

Next, with reference to Figs: 7 to 13, preferred aspects of the concentric rectifying section 24 will be explained, but the explanation can be applied to the concentric separating section 26.

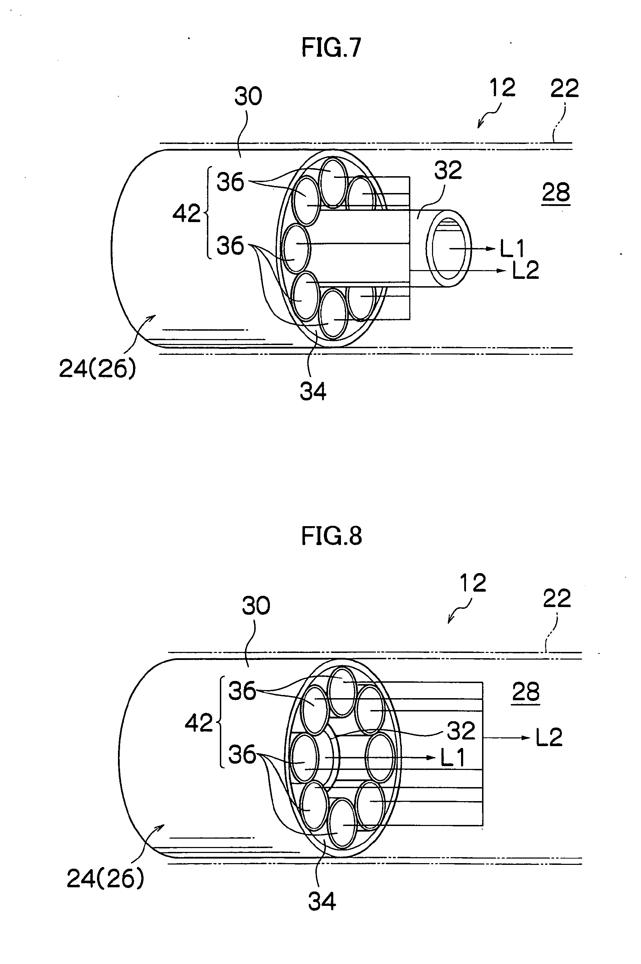

Fig. 7 shows an aspect of the concentric rectifying section 24 in which the centrally positioned smaller diameter circular tube 32 in the concentric rectifying section 24 is deviated from the outlet position of the group of annularly disposed tubes 42, and is projected toward the fluid flow path, as described for Fig. 6, and Fig. 8 shows an aspect of the concentric rectifying section 24 in which the smaller diameter circular tube is retracted back from the outlet position of the group of annularly disposed tubes 42.

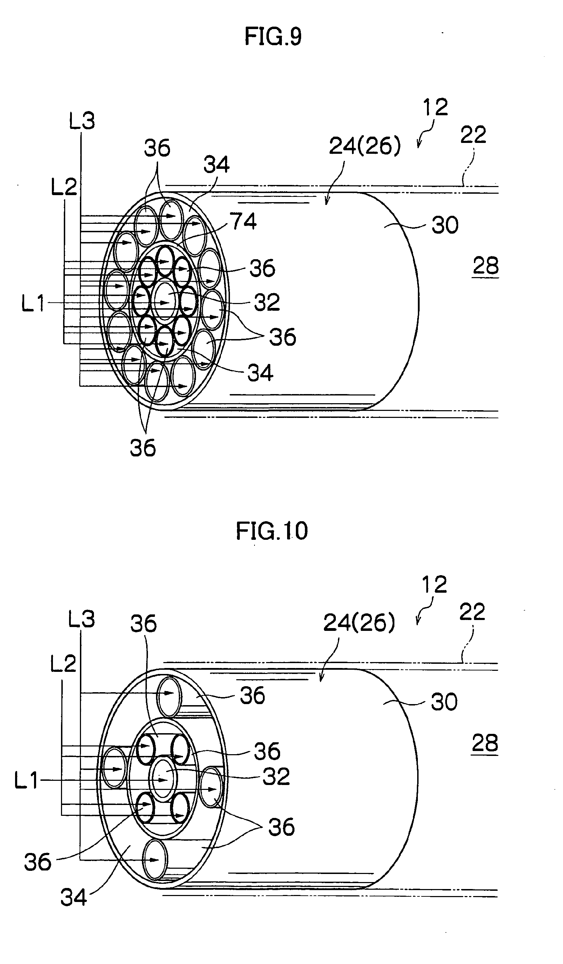

Fig. 9 shows an aspect of a concentric rectifying section 24 which is preferable to form three-layer concentric flow using three liquids (L1, L2, and L3), and includes a larger diameter circular tube 30, a middle diameter circular tube 74, and a smaller diameter circular tube 32. There are provided two circular annular spaces 34 (between the larger diameter circular tube 30 and the middle diameter circular tube 74, and between the middle diameter circular tube 74 and the smaller diameter circular tube 32), and a plurality of centering circular tubes 36 (eight and twelve respectively, in Fig. 9) having a same diameter (i.e., having a same outer diameter) are closely disposed along each circular annular space 34.

Fig. 10 shows a concentric rectifying section 24 in which four centering circular tubes 36 are disposed in each of the circular annular spaces 34 at an angle of 90 degrees from each other. In this case, the minimum number of centering circular tubes 36 is three at an angle of 120 degrees from each other. The larger diameter circular tube 30, the middle diameter circular tube 74, the smaller diameter circular tube 32, and the centering circular tubes 36 are all fixed not to move relative to each.other. The larger diameter circular tube 30, the middle diameter circular tube 74, the smaller diameter circular tube 32, and the centering circular tubes 36 may be fixed to each other by adhesive, diffusion bonding, as well as fitting which is performed by relatively forming an axial ridge and an axial recess on each of the larger diameter circular tube 30, the middle diameter circular tube 74, the smaller diameter circular tube 32, and the centering circular tubes 36 and fitting the ridges and the axial recesses to each other. A fluid L2 or a fluid L3 may be, as shown in Fig. 10, supplied into the spaces between the centering circular tubes 36 in the circular annular spaces 34. In order to supply more amount of the fluid L2 or the fluid L3 compared to the among of a fluid L1, the fluid L2 or the fluid L3 may be supplied both in the above spaces and the in the centering circular tubes 36.

In the concentric rectifying section 24 shown in Figs. 7 to 13 except Fig. 10, the circular tubes or polygonal tubes are closely disposed not to move relative to each other, and so may not be fixed to each other, or may be fixed by fixing devices such as adhesive, diffusion bonding, fitting as in Fig. 10.

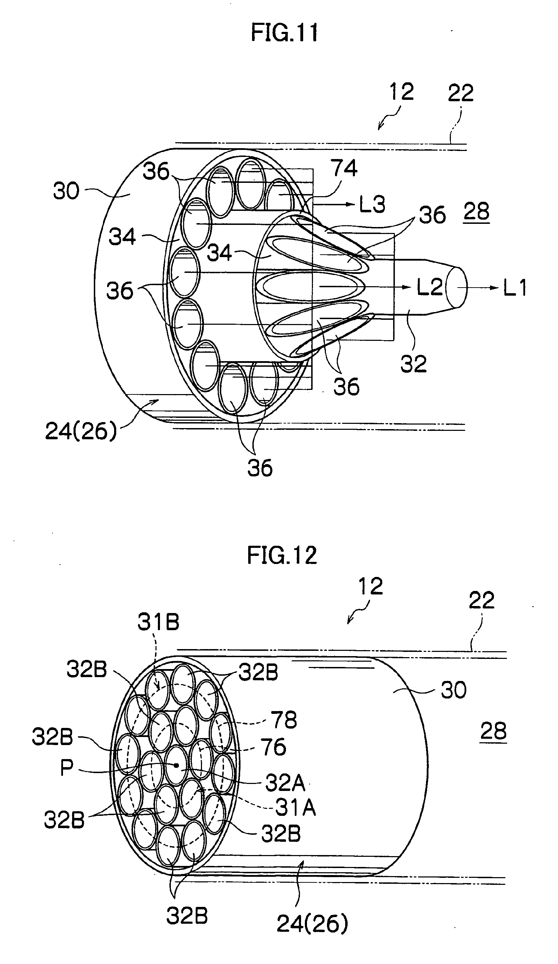

Fig. 11 shows an aspect of a concentric rectifying section 24 which has outlet openings for three fluids L1, L2, and L3 which are positioned to be deviated from each other, with the outlet of the centrally positioned smaller diameter circular tube 32 being tapered to reduce the diameter thereof, and also the outlets of the centering circular tubes 74 displaced in the circular annular space 34 between the smaller diameter circular tube 32 and the middle circular tube 74 being cut into a tapered shape. The deviated positions of outlet openings for three fluids L1, L2, and L3 stabilize the flows of the fluids, and a stable concentric flow can be formed. And the reduced diameter of the outlet of the centrally positioned smaller diameter circular tube 32 and the tapered shape of the outlet of the centering circular tubes 74 stabilizes the outflows of the fluids, and a more stable concentric flow can be formed.

Each of Fig. 9 to Fig. 11 shows an aspect of a concentric rectifying section 24 which is preferable to form three-layer concentric flow with three fluids L1, L2, and L3, but the aspects are not limited to cases with three fluids L1, L2, and L3, and can be applied to cases to form a concentric flow with two fluids. That is, a double-layer concentric flow may be formed by using a same kind of fluid for fluid L1 and fluid L2 among the above three fluids L1, L2, and L3, or a double-layer concentric flow may be formed by using a same kind of fluid for fluid L2 and fluid L3 among the above three fluids L1, L2, and L3. This changes a thickness of each layer of the double-layer concentric flow.

A concentric rectifying section in Fig. 12 is configured to have a number of smaller diameter circular tubes 32 having same diameter closely housed in a larger diameter circular tube 30, and one of the smaller diameter circular tubes 32 is disposed coaxially about a central axis P of the larger diameter circular tube 30, and a group of annularly disposed circular tubes 31 which is consisted of the other smaller diameter circular tubes 32B being:annularly disposed around the one centrally positioned smaller diameter circular tube 32A, forms at least one layer or more.

In the above described configuration of the concentric rectifying section 24, the center of the centrally positioned smaller diameter circular tube 30A is coincident with the center of a first imaginary ring (dotted line 76) which is formed by a line connecting the centers of each smaller diameter circular tube 32B of a first group of annularly disposed circular tubes 31A. Furthermore, the center of the centrally positioned smaller diameter circular tube 30A is coincident with a second imaginary ring (dotted line 78) which is formed by a line connecting the centers of each smaller diameter circular tube 32B of a second group of annularly disposed circular tubes 31B. The same is true in cases where there are provided with another group of annularly disposed circular tubes 31A, 31B. This means the centrally positioned smaller diameter circular tube 32A, the first group of annularly disposed circular tubes 31A, and the second group of annularly disposed circular tubes 31B are positioned about a common central axis P, and so when a fluid L1 is supplied in the central smaller diameter circular tube 32A, a fluid L2 is supplied in the first group of annularly disposed circular tubes 31A, and a fluid L3 is supplied in the second group of annularly disposed circular tubes 31B, a precisely concentric three-layer flow will flow into the fluid flow path 28.

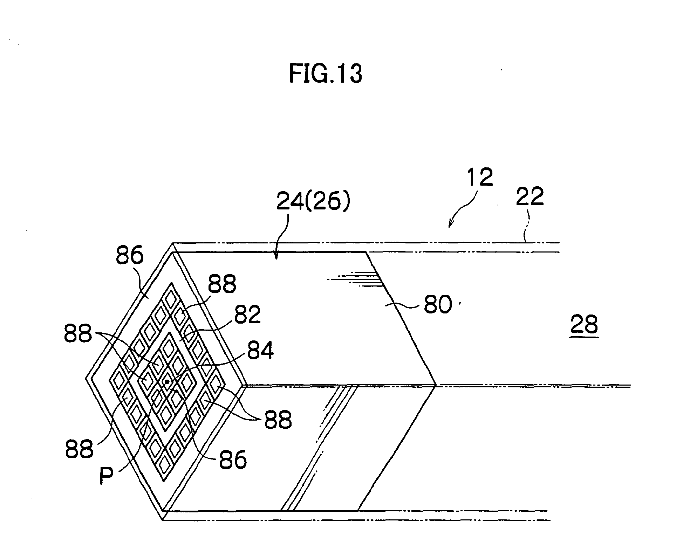

Fig. 13 shows a concentric rectifying section 24 for forming a concentric flow of a regular polygonal cross section which forms a three-layer concentric flow having a rectangular (e.g. square) cross section with three fluids L1, L2, and L3. The concentric rectifying section 24 has a three tube configuration including a larger diameter polygonal tube 80, a middle diameter polygonal tube 82, and a smaller diameter polygonal tube 84, which all have square cross sections in the diameter direction thereof. There are provided two square annular spaces 86 (between the larger diameter polygonal tube 80 and the middle diameter polygonal tube 82, and the middle diameter polygonal tube 82 and the smaller diameter polygonal tube 84) in which a plurality of centering polygonal tube 88 (eight and twenty, in Fig. 13) having a same diameter (same outer diameter) and a square cross section in the diameter direction are closely disposed along the square annular spaces 86. In the concentric rectifying section 24 having the above configuration also, because the larger diameter polygonal tube 80, the middle diameter polygonal tube 82, and the smaller diameter polygonal tube 84 have a common central axis P, a precisely concentric square three-layer flow can flow into the fluid flow path 28. In this case, the outer shell tube 22 which forms the fluid flow path 28 needs to be a polygonal tube having a square cross section. Not shown, but the smaller diameter polygonal tubes having a same diameter (same outer diameter) may be closely housed in the larger diameter polygonal tube so that a grid-like flow path may be formed in the larger diameter polygonal tube.

The concentric rectifying section 24 may be configured in a different way from those for the concentric separating section 26, and for example, any configuration shown in Figs. 2 to 12 can be optionally combined to form an annular concentric flow.

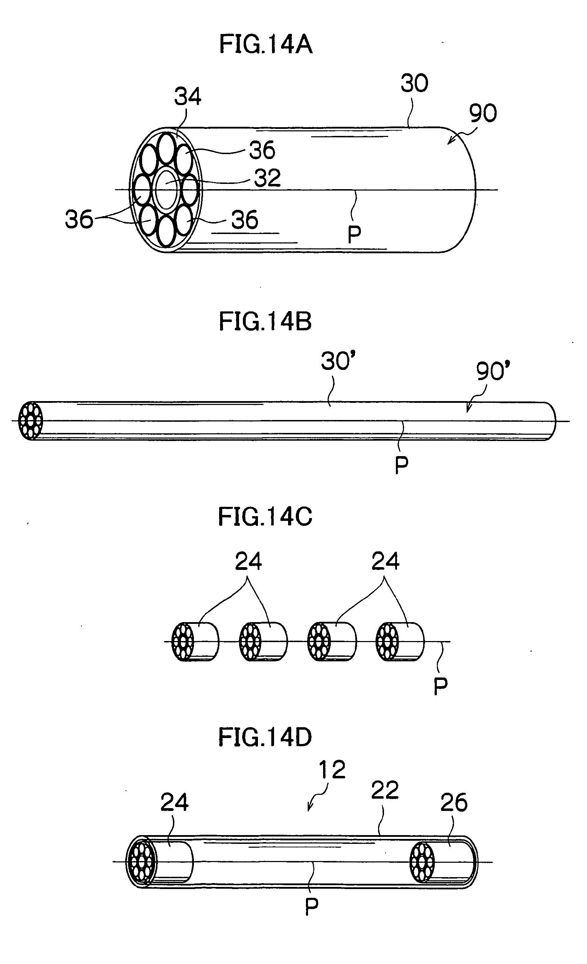

Now, a process for manufacturing a fluidic device 12 will be explained below, by way of an example shown in Fig. 2 for forming a double-layer concentric flow. Figs. 14A to 14C show the process for manufacturing a concentric rectifying section 24 and a concentric rectifying section 26, and Fig. 14D shows an outer shell tube 22 to which the manufactured concentric rectifying section 24 and the concentric separating section 26 are assembled. The manufactured concentric rectifying section 24 and the concentric separating section 26 are basically configured in the same way as each other and manufactured in the same way, and so only an example for manufacture a concentric rectifying section 24 will be explained below.

The method for manufacture a concentric rectifying section 24 generally includes a step for manufacturing an original body, a step for extending the body, and a step for cutting the body.

In the step for manufacturing an original body, as shown in Fig. 14A, an original body 90 is manufactured by closely displacing a plurality of centering circular tubes 36 having a same diameter (same outer diameter) along the circular annular space 34 between an outer larger diameter circular tube 30 and an inner smaller diameter circular tube 32 in the two tube structure. The original body 90 is previously manufactured to have a larger diameter than that required at the final step in the concentric rectifying section 24. In the original body 90 of this configuration, as seen in Fig. 14A, the smaller diameter circular tube 32 and the centering circular tubes 36 are closely housed in the larger diameter circular tube 30, and also the smaller diameter circular tube 32 and the centering circular tubes 36 are concentrically arranged about the central axis of the larger diameter circular tube 90. Therefore, even being extended in the next extending step, the whole original body 90 becomes thinner but has same cross section radially. The diameter of the larger diameter circular tube 30 in the original body 90 is preferably approximately within a range of from 10 mm to 50 mm. The tube may be preferably made of metal (e.g. stainless material), resin, glass, and the like.

In the extending step, as shown in Fig. 14B, the manufactured original body 90 is extended in the longitudinal direction thereof to reduce the cross section area of the original body 90 which has a required diameter at the final step. In this step, the original body 90 may be conveniently heated to a temperature beforehand which facilitates the extending, depending on the used material such as stainless material, resin, glass and the like. In this way, an extended original body 90' is manufactured. The extended original body 90' has a diameter which is preferably a size adequate to form a laminar concentric flow in the fluid flow path 28, for example preferably 10 mm or less, more preferably 1 mm or less for an extended larger diameter circular tube 30'.

In the cutting step, as shown in Fig. 14C, the extended original body 90' is cut into a length required for a concentric rectifying section 24. In this way, a concentric rectifying section 24 is manufactured. Since a plurality of concentric rectifying sections 24 are manufactured, one of them may be used as a concentric separating section 26, or another aspect of a concentric rectifying section 24 shown in Fig. 7 to Fig. 12 may be used as a concentric separating section 26.

As shown in Fig. 14D, the manufactured concentric rectifying section 24 is removably fitted in an inlet portion of an outer shell tube 22, and a concentric separating section 26 is removably fitted in an outlet portion of an outer shell tube 22. In this way, a fluidic device 12 is manufactured.

In the above described method for manufacturing a concentric rectifying section 24, as far as inner tubes (e.g. smaller diameter circular tube, centering circular tubes) are closely filled in the outmost tube (e.g. larger diameter circular tube) in order to precisely extend the original body 90, square tubes, or regular polygonal tubes may be used other than circular tubes.

With the above configuration, the concentric rectifying section 24 and the concentric separating section 26 having a narrow diameter on the order or 10 mm or less can be easily manufactured by machining, and do not require any special processing method such as microelectro-discharge machining. Therefore, a fluidic device 12 including a micro flow path can be easily manufactured at a low cost. By changing an extension rate in the extending step for extending the original body 90, the diameter of the concentric rectifying section 24 and the concentric separating section 26 can be easily changed. When a fluidic device 12 having a high aspect ratio (flow path length/equivalent diameter) is necessary, the fluidic device 12 can be easily manufactured by controlling an extension rate in the extending step and a cut length in the cutting step.

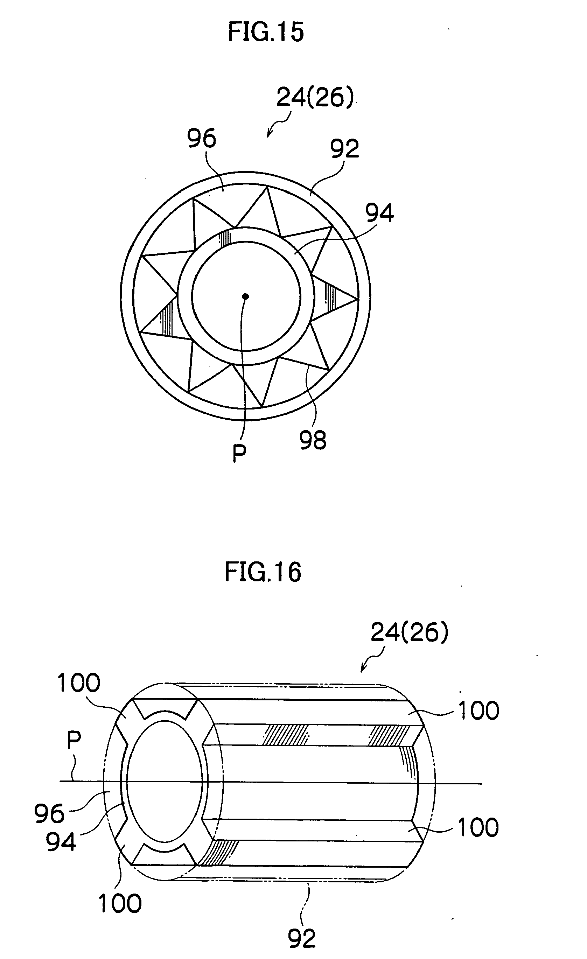

Fig. 15 and Fig. 16 show another aspect of the present invention which has another configuration unlike in the case of the concentric rectifying section 24 and the concentric separating section 26 using circular tubes or regular polygonal tubes (e.g. square tubes) as shown in Figs. 7 to 13 to enhance concentricity, but this configuration which will be explained below is also preferable to enhance concentricity.

A concentric rectifying section 24 or a concentric separating section 26 of Fig. 15 has a multi-tube structure with two or more circular tubes which includes an outer larger diameter circular tube 92 and an inner smaller diameter circular tube 94. There is provided a circular annular space 96 between the larger diameter circular tube 92 and the smaller diameter circular tube 94, which accommodates a cylindrical corrugated plate 98 therein. The cylindrical corrugated plate 98 is made of a corrugated plate rolled in a cylindrical shape and is interposed between the larger diameter circular tube 92 and the smaller diameter circular tube 94 with being in contact with an inner surface of the larger diameter circular tube 92 and an outer surface of the smaller diameter circular tube 94. This allows the larger diameter circular tube 92 and the smaller diameter circular tube 94 to have a common central axis P, and when a fluid L1 is supplied in the smaller diameter circular tube 94 and a fluid L2 is supplied between the larger diameter circular tube 92 and the smaller diameter circular tube 94, a precisely concentric double-layer flow can be formed. When the concentric rectifying section 24 or the concentric separating section 26 has a multi-tube structure, a plurality of cylindrical corrugated plates 98 may be used.

A concentric rectifying section 24 or a concentric separating section 26 of Fig. 16 has a multi-tube structure with two or more circular tubes which includes an outer larger diameter circular tube 92 (the larger diameter circular tube 92 may be an outer shell tube 22, in this case) and an inner smaller diameter circular tube 94. There is provided a circular annular space 96 between the larger diameter circular tube 92 and the smaller diameter circular tube 94, which accommodates a plurality of ribs 100 therein. The plurality of ribs 100 which runs parallel to the central axis P of the smaller diameter circular tube 94 are circumferentially disposed on the smaller diameter circular tube 94 with being equally spaced from each other. The plurality of ribs 100 need to have a same height which contacts the inner surface of the larger diameter circular tube 92 in a two tube structure. In this case, the number of the ribs is preferably three or more. The ribs are preferably integrally formed with the smaller diameter circular tube 94. This allows the larger diameter circular tube 92 and the smaller diameter circular tube 94 to have a common central axis P, and when a fluid L1 is supplied in the smaller diameter circular tube 94 and a fluid L2 is supplied between the larger diameter circular tube 92 and the smaller diameter circular tube 94, a precisely concentric double-layer flow can be formed.

### [Example]

Now, examples of the present invention will be explained by way of an example to form a three-layer concentric flow with three fluids: a fluid L1 (inner layer), a fluid L2 (middle layer), and a fluid L3 (outer layer). A fluidic device 12 was used in which a concentric rectifying section 24 and a concentric separating section 26 having the configuration shown in Fig. 9 were fitted in an inlet portion and an outlet portion of an outer shell tube 22 forming a fluid flow path 28, respectively. The concentric rectifying section 24 and the concentric separating section 26 were manufactured in the manufacture method as described above, and in the cutting step, the extended original body 90' was cut in the length of 5 mm. In the manufactured concentric rectifying section 24 and the concentric separating section 26, the larger diameter circular tube 30 had an outer diameter of 2.5 mm and an inner diameter of 2.0 mm, while the smaller diameter circular tube 32 had an outer diameter of 0.925 mm and an inner diameter of 0.71 mm, and the centering circular tubes (eight were used) had an outer diameter of 0.54 mm and an inner diameter of 0.35 mm. The tubes were made of SUS316.

The manufactured concentric rectifying section 24 and the concentric separating section 26 were cut at several positions along the longitudinal direction thereof without any special precise positioning, and the concentricities (i.e. a deviation between the central axes P of the circular tubes) of the larger diameter circular tube 30 and the smaller diameter circular tube 32 were measured, to find the results to be 5 µm or less.

Then, five fluidic devices 12 were assembled to a support case 14 to complete a fluidic device unit 10. A test to manufacture a photosensitive emulsion was performed using the fluidic device unit 10.

In the test, the fluid L1 was a solution of silver nitrate, the fluid L2 was a solution of gelatin, and the fluid L3 was a solution of haloid. The solution of silver nitrate L1 and the solution of haloid L3 were adjusted to have concentrations which finish a reaction when being mixed in a ratio of 1:1 on a volume basis. In each fluids L1, L2, and L3 which flow out of the concentric rectifying section 24 into the fluid flow path 28 as a laminar concentric flow, the solution of silver nitrate L1 and the solution of haloid L3 were set to finish a reaction with the solution of gelatin L2 at a same flow rate and at a same time. If any difference between the flow rates of the solution of silver nitrate L1 and the solution of haloid L3 were produced due to influence of viscosities of each fluids L1, L2, and L3, shear resistance between the inner wall surface of the fluid flow path 28, or the like, the concentrations of the fluids or pressures for supplying the fluids were adjusted to optimize the reaction condition in the solution of gelatin L2.

According to the example as performed above, due to the concentric rectifying section 24, each fluids L1, L2, and L3 flew as a three layer concentric flow of a precise laminar flow into the fluid flow path 28, and through the fluid flow path 28, the solution of silver nitrate L1 which formed an inner layer and the solution of haloid L3 which formed an outer layer of the three layer concentric flow were dispersed in the solution of gelatin L2, which formed a middle layer, and reacted with the solution of gelatin L2 , resulting in producing photosensitive emulsion, a reaction product. In the concentric separating section 26, the inner layer, the middle layer, and the outer layer were separated into a concentric flow, and a photosensitive emulsion of a high degree of purity was obtained in the middle layer portion.

In producing the photosensitive emulsion, no produced photosensitive emulsion attached to the outlet of the concentric rectifying section 24 or the inner wall surface of the fluid flow path 28, and the steps of the manufacturing were all performed in a stable way.

Further, comparing the costs for manufacturing between the fluidic device 12 of a three fluid type according to the present invention and the fluid device explained above with respect to Japanese Patent Application Laid-Open No. 2003-164745 of the conventional art, the fluidic device 12 according to the present invention required about half of that for conventional art, which proves that the photosensitive emulsion was manufactured with a low cost.

## Claims

1. A fluidic device (12), **characterized by** comprising a concentric rectifying section (24) for rectifying a plurality of supplied fluids to form a concentric flow of the fluids, and a fluid flow path (28) for distributing the concentric flow out of the concentric rectifying section (24) for an intended process, **characterized in that**
the concentric rectifying section (24) is of a multi-tube structure with two or more tubes including:
an outer larger diameter tube (30);
a smaller diameter tube (32) positioned inside of the larger diameter tube (30) with an annular space (34) provided therebetween; and
a plurality of centering tubes (36) disposed along the annular space (34) which are in contact with both of an inner surface of the larger diameter tube (30) and an outer surface of the smaller diameter tube (32) to make the larger diameter tube (30) and the smaller diameter tube (32) have a common central axis.

2. The fluidic device (12) according to claim 1, **characterized in that**
the larger diameter tube (30), the smaller diameter tube (32) and the centering tubes (36) are circular tubes having a circular cross section.

3. The fluidic device (12) according to claim 1, **characterized in that**
the larger diameter tube (30), the smaller diameter tube (32) and the centering tubes (36) are polygonal tubes having a regular polygonal cross section.

4. The fluidic device (12) according to claim 3, **characterized in that**
the polygonal tube is a polygonal tube having a square cross section.

5. The fluidic device (12) according to any one of claims 1 to 4, **characterized in that**
a diameter of the larger diameter tube (30), a diameter of the smaller diameter tube (32), and a diameter of the centering tubes (36) are set so that the centering tubes (36) are in contact with each other.

6. A fluidic device (12), **characterized by** comprising, a concentric rectifying section (24) for rectifying a plurality of supplied fluids to form a concentric flow of the fluids, and a fluid flow path (28) for distributing the concentric flow out of the concentric rectifying section (24) for an intended process, **characterized in that**
the concentric rectifying section (24) includes a larger diameter tube (30) in which a plurality of smaller diameter tubes (32) of a same diameter are closely disposed, with one of the plurality of smaller diameter tubes (32) being disposed coaxially about a central axis of the larger diameter tube (30), and a group of annularly disposed tubes, which is consisted of the remaining smaller diameter tubes (32) other than the central coaxially disposed tube, forming at least one or more layer of tubes about the central coaxially disposed tube.

7. The fluidic device (12) according to claim 6, **characterized in that**
the larger diameter tube (30) is a circular tube having a circular cross section, and the smaller diameter tube (32) is a circular tube having a circular cross section.

8. The fluidic device (12) according to claim 6, **characterized in that**
the larger diameter tube (30) is a polygonal tube having a regular polygonal cross section, and the smaller diameter tube (32) are polygonal tubes having a regular polygonal cross section.

9. The fluidic device (12) according to claim 8, **characterized in that**
the polygonal tube is a polygonal tube having a square cross section.

10. The fluidic device (12) according to any one of claims 1 to 9, **characterized in that**
among the tubes which form the concentric rectifying section (24), the tube at the outermost has an inner diameter which allows a laminar concentric flow to be formed in the fluid flow path (28).

11. The fluidic device (12) according to any one of claims 1 to 10, **characterized in that**
among the tubes which form the concentric rectifying section (24), the centrally located tube has a length which is different from lengths of the other tubes.

12. The fluidic device (12) according to any one of claims 1 to 11, **characterized in that**
at least one of the tubes which form the concentric rectifying section (24) has an outlet opening which is cut into a tapered shape:

13. The fluidic device (12) according to any one of claims 1 to 12, **characterized in that**
the concentric rectifying section (24) is removably fitted in an inlet opening of an outer shell tube (22) which forms the fluid flow path (28).

14. The fluidic device (12) according to any one of claims 1 to 13, **characterized in that**
the outer shell tube (22) for the fluid flow path (28) has an outlet opening in which a concentric flow separating section is removably fitted to separate the fluids flowing through the fluid flow path (28) into a concentric flow.

15. The fluidic device (12) according to claim 14, **characterized in that**
the concentric rectifying section (24) and the concentric separating section are fitted into an outer shell tube (22), which forms the fluid flow path (28), being movable in a direction of a longitudinal axis of the outer shell tube (22).

16. The fluidic device (12) according to any one of claims 13 to 15, **characterized in that**
the outer shell tube (22) is configured to be divided in two parts along a longitudinal axis thereof.

17. The fluidic device (12) according to any one of claims 14 to 16, further **characterized by** comprising a through tube which runs through both central axes of the concentric rectifying section (24) and the concentric separating section.

18. A fluidic device (12), **characterized by** comprising, a concentric rectifying section (24) for rectifying a plurality of supplied fluids to form a concentric flow of the fluids, and a fluid flow path (28) for distributing the concentric flow out of the concentric rectifying section (24) for an intended process, **characterized in that**
the concentric rectifying section (24) is configured to have a multi-tube structure with two or more circular tubes including:
an outer larger diameter circular tube (30);
a smaller diameter circular tube (32) positioned inside of the larger diameter tube (30) with a circular annular space (34) provided therebetween; and
a cylindrical corrugated plate which is made of a corrugated plate rolled in a cylindrical shape and is interposed between the larger diameter circular tube (30) and smaller diameter circular tube (32) with being in contact with an inner surface of the larger diameter circular tube (30) and an outer surface of the smaller diameter circular tube (32).

19. A fluidic device (12), **characterized by** comprising, a concentric rectifying section (24) for rectifying a plurality of supplied fluids to form a concentric flow of the fluids, and a fluid flow path (28) for distributing the concentric flow out of the concentric rectifying section (24) for an intended process, **characterized in that**
the concentric rectifying section (24) is configured to have a multi-tube structure with two or more circular tubes including:
an outer larger diameter circular tube (30);
a smaller diameter circular tube (32) positioned inside of the larger diameter tube (30) with a circular annular space (34) provided therebetween; and
a plurality of ribs (100) which runs parallel to the central axis of the smaller diameter circular tube (32) have a uniform height to contact the larger diameter circular tube (30), and are circumferentially displaced on the smaller diameter circular tube (32) with being separated from each other by a uniform space.
